# EUROPEAN PATENT APPLICATION

(11) **EP 2 416 399 A1**
(43) Date of publication of application: **08.02.2012**
(21) Application number: 09842626.5
(22) Date of filing: 31.03.2009
(51) Int. Cl.: H01M 2/02, H01M 2/34

(54) **SECONDARY BATTERY AND BATTERY SYSTEM**

(71) Applicant: Mitsubishi Heavy Industries, Ltd., Tokyo 108-8215 (JP)
(72) Inventor: HASHIMOTO, Tsutomu, Tokyo 108-8215 (JP)
(74) Representative: Henkel, Breuer & Partner
(86) International application number: PCT/JP2009/056682
(87) International publication number: WO 2010/113272

(57) **Abstract**

A secondary battery in accordance with the present invention includes a square battery can (1) at which a positive electrode terminal and a negative electrode terminal are installed, an electrode assembly disposed in the square battery can and is formed by a lamination of a sheet-shaped positive electrode (2) electrically connected to the positive electrode terminal and a sheet-shaped negative electrode (3) electrically connected to the negative electrode terminal with a separator interposed therebetween, a fixing tape (9), and first and second auxiliary insulating sheets (8) each having a first part having a width substantially the same as a width of the electrode assembly in a length direction of a surface of the square battery can on which the positive electrode terminal and the negative electrode terminal are formed, and a second part having a center positioned on substantially a same line perpendicular to the surface as a center of the first part in the length direction and a width larger than the width of the electrode assembly in the length direction. The first and second auxiliary insulating sheets (8) are disposed at opposite positions to sandwich the electrode assembly therebetween from sides of the surface along the length direction and connected to each other by the fixing tape in the first part in the state of pressing the electrode assembly.

## Description

### [Technical Field]

The present invention relates to a secondary battery in which a positive electrode and a negative electrode are stacked or laminated with a separator interposed therebetween, and a power feeding and storage system using the battery.

### [Background Art]

Among secondary batteries as rechargeable batteries, in particular, lithium ion secondary batteries are widely used as power sources for home appliances because they have high energy density and high capacity. In recent times, lithium ion secondary batteries are attracting attention as power sources for electric vehicles, power sources for houses, and storage batteries for storing residual power of power plants, or the like.
The lithium ion secondary batteries may be classified into a wound-type lithium ion secondary battery, which may be called as a cylindrical-type lithium ion secondary battery and in which a pair of sheet-shaped positive and negative electrodes are stacked or laminated with a separator interposed therebetween in a spiral shape, and a stack-type lithium ion secondary battery in which a plurality of sheet-shaped positive electrodes and negative electrodes are stacked or laminated with a plurality of separators interposed therebetween.
In the stack-type lithium ion secondary battery, an electrode assembly constituted by the plurality of sheet-shaped positive electrodes and negative electrodes is generally encapsulated in a square battery can, which may be called as a prismatic can, having a substantially rectangular cross-section. Meanwhile, in the wound-type lithium ion secondary battery, an electrode assembly, constituted by the pair of sheet-shaped poritive electrode and negative electrode, may be encapsulated in a cylindrical battery can having a substantially cylindrical cross-section, or may be encapsulated in the square battery can.

However, for the stack-type or wound-type lithium ion battery, when the square battery can is used, since the sheet-shaped positive electrode and negative electrode are stacked or laminated with the separator interposed therebetween, misalignment of the positive electrode and the negative electrode in the square battery can, i.e., "a misaligned stack" may occur. When such a misaligned stack occurs, the positive electrode and the negative electrode contact each other, increasing the probability of failures such as a short circuit, or the like, occurring in the battery. In addition, since the square battery can is formed of a conductive material, insulation from the positive electrode and the negative electrode is needed.
Accordingly, when the electrode assembly of the stack-type lithium ion secondary battery is encapsulated in the square battery can, a technique of forming an auxiliary sheets on the surface of sheet-shaped electrodes (e.g., the sheet-shaped positive electrode or the sheet-shaped negative elecrode), arranged at both ends of the electrode assembly, and fixing it to the electrode assembly by using tape, has been proposed (see Patent Document 1).
[Patent Document 1]
   Japanese Unexamined Patent Application Publication No. 2008-91099

### [Disclosure of the Invention]

### [Technical Problem]

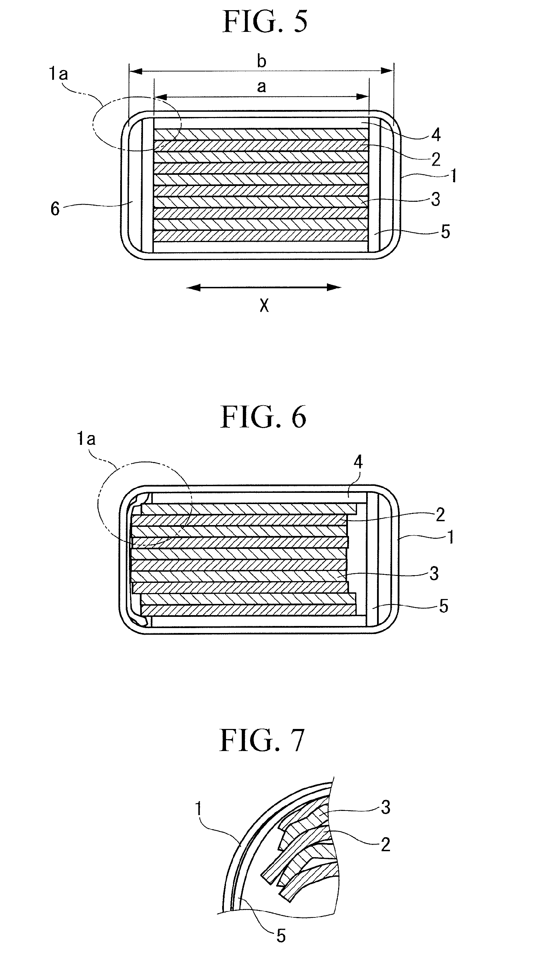

According to the proposal, it is said that it is possible to prevent the occurrence of the misaligned stack by fixing the auxiliary sheets with the electrode assembly by using tape, in addition to insulate the electrode assembly against the square battery can to a direction of the stack of the electrodes, which is called as "lamination direction". However, it is found that the misaligned stack cannot be sufficiently prevented according to the proposal and that it is difficult to sufficiently provide designed performance. This will be described below with reference to FIGS. 5, 6 and 7.

FIG. 5 shows a cross-section in a direction parallel to a surface in which a positive electrode terminal (not shown) and a negative electrode terminal (not shown) are formed among surfaces of a square battery can 1. An electrode assembly, in which sheet-shaped positive electrodes 2 and negative electrodes 3 are stacked or laminated with separators (not shown) interposed therebetween, is inserted into the square battery can 1. In order to insulate the electrode assembly from the square battery can 1 formed of a conductive material, as shown in the drawings, insulating films 4 and 5 formed of polypropylene are arranged at four sides of the electrode assembly in directions of the long side and the short side of the surface in which the positive electrode terminal and the negative electrode terminal are formed. When an electrode surface width "a" is equal to an internal length "b" of the length direction X, since corners 1a of the square battery can are rounded, the sheet-shaped electrodes adjacent to the corners 1a are pressed and deformed to break the separators, increasing probability of failures such as a short circuit, or the like. In order to avoid deformation of the sheet-shaped electrodes, the electrode surface width "a" is designed to have a length slightly smaller than the internal length "b" in the length direction X and not affected by the round of the corners 1a of the battery can.
In addition, since an electrolyte should be stored in the square battery can 1, a predetermined space, i.e., a hollow portion 6, must be provided between the electrode assembly and the square battery can 1. For this reason, the insulating film 5 is formed of an insulating material having a thickness that can ensure the insulation. In other words, an extremely thin insulating material having no stiffness may be used.

However, in this configuration, for example, in the case that the battery is used as a power source for an electric vehicle, when continuous vibrations are applied to the square battery can 1, the insulating film 5 is deformed by the weight of the electrode assembly along the shape of the square battery can 1, and a misaligned stack occurs between the positive electrodes 2 and the negative electrodes 3 in the length direction as shown in FIG. 6. That is, the misaligned stack occurs in a direction along the surfaces of the positive and negative electrodes 2 and 3, i.e., in a direction perpendicular to the lamination direction. When the misaligned stack occurs, as shown in FIG. 7 in which the corner 1a of the square battery can 1 is enlarged, the sheet-shaped positive electrode 2 and the sheet-shaped negative electrode 3 corresponding to ends of the electrode assembly are deformed along the square battery can 1. When vibrations are further applied in addition to the deformed state, the separator might be broken to cause failures such as a short circuit, or the like. Meanwhile, since the sheet-shaped electrode arranged at a center of the electrode assembly is in contact with an inner wall of the square battery can 1 in a direction perpendicular to the inner wall, even when the misaligned stack occurs, deformation of the electrode such as distortion cannot easily occur. Therefore, probability of causing a failure is also very low.

In consideration of the above problems, it is an object of the present invention to provide a secondary battery and a power feeding or storage system using the battery that are capable of preventing deformation of electrodes at corners of a square battery can, and maximally exerting designed performance of the battery, even when continuous vibrations are applied to the battery.

### [Means for solving the Problems]

In order to solve the problems, a secondary battery of the present invention includes the following elements.
That is, the secondary battery includes,
a square battery can including a positive electrode terminal and a negative electrode terminal,
an electrode assembly arranged in the square battery can, in which a sheet-shaped positive electrode electrically connected to the positive electrode terminal and a sheet-shaped negative electrode electrically connected to the negative electrode terminal are stacked with a separator interposed therebetween,
a fixing tape, and
a first auxiliary insulating sheet and a second auxiliary insulating sheet, each having a first part of which width is substantially the same as width of the electrode assembly in a direction of a long side of a surface of the square battery can, on which the positive electrode terminal and the negative electrode terminal are formed, and a second part of which width, having the middle point on a line perpendicular to the surface and on which the middle point of the width of the first part exists substantially, is larger than the width of the electrode assembly in the direction of the long side,
wherein the first auxiliary insulating sheet and the second auxiliary insulating sheet are arranged to sandwich the electrode assembly between them from sides of the electrode assembly corresponding to the long side of the surface and connected to each other by the fixing tape in the first part.

In addition, an electric vehicle as a power feeding system in accordance with the present invention includes
a secondary battery, and
a motor for driving wheels,
wherein the motor is driven by receiving electric power from the secondary battery, and
the secondary battery including
a square battery can including a positive electrode terminal and a negative electrode terminal,
an electrode assembly arranged in the square battery can, in which a sheet-shaped positive electrode electrically connected to the positive electrode terminal and a sheet-shaped negative electrode electrically connected to the negative electrode terminal are stacked with a separator interposed therebetween,
a fixing tape, and
a first auxiliary insulating sheet and a second auxiliary insulating sheet, each having a first part of which width is substantially the same as a width of the electrode assembly in a direction of a long side of a surface of the square battery can, on which the positive electrode terminal and the negative electrode terminal are formed, and a second part of which width, having the middle point on a line perpendicular to the surface and on which the middle point of the width of the first part exists substantially, is larger than the width of the electrode assembly in the direction of the long side,
wherein the first auxiliary insulating sheet and the second auxiliary insulating sheet are arranged to sandwich the electrode assembly between them from sides of the electrode assembly corresponding to the long side of the surface and connected to each other by the fixing tape in the first part.
The electric vehicle may be a vehicle that can be driven by electricity. Therefore, the electric vehicle may be a hybrid vehicle.

Further, a power storage system in accordance with the present invention includes:
a secondary battery, and
a power generation equipment,
wherein the secondary battery receives electric power from the power generation equipment to store the power, and
the secondary battery including
a square battery can including a positive electrode terminal and a negative electrode terminal,
an electrode assembly arranged in the square battery can, in which a sheet-shaped positive electrode electrically connected to the positive electrode terminal and a sheet-shaped negative electrode electrically connected to the negative electrode terminal are stacked with a separator interposed therebetween,
a fixing tape, and
a first auxiliary insulating sheet and a second auxiliary insulating sheet, each having a first part of which width is substantially the same as a width of the electrode assembly in a direction of a long side of a surface of the square battery can, on which the positive electrode terminal and the negative electrode terminal are formed, and a second part of which width, having the middle point on a line perpendicular to the surface and on which the middle point of the width of the first part exists substantially, is larger than the width of the electrode assembly in the direction of the long side,
wherein the first auxiliary insulating sheet and the second auxiliary insulating sheet are arranged to sandwich the electrode assembly therebetween from sides of the electrode assembly corresponding to the long side of the surface and connected to each other by the fixing tape in the first part.
The power generation equipment may be a solar cell, a fuel cell, a windmill, thermal power generation equipment, hydroelectric generation equipment, nuclear power generation equipment, or any one of equipment for generating power, and a simple power generator installed at an vehicle, a bicycle, or the like. The power generation equipment is not limited to a power plant and it may be a power generator installed in a house.

According to the secondary battery and a battery system of the present invention, the electrode assembly is pressed by the two auxiliary insulating sheets having the first part having a width substantially the same as the width of the electrode assembly in the direction of the long side of the surface of the square battery can, on which the positive electrode terminal and the negative electrode terminal are formed, and the second part having a width larger than the width of the electrode assembly in the direction of the long side of the surface. In addition, the first parts of the two auxiliary insulating sheets are connected to each other by the fixing tape. Accordingly, the electrode assembly can be securely fixed between the two auxiliary insulating sheets. That is, by connecting the first parts of the two auxiliary insulating sheets between which the electrode is sandwiched each other, since the first parts have substantially the same width as the electrode assembly, the electrode assembly can be securely fixed without becoming loose.
Therefore, even when the electrode assembly is shaken in the square battery can due to vibrations, or the like, since the second parts having a large width projecting from the electrode assembly toward the direction of the long side of the surface are stopped by the rounded parts of the corners of the square battery can, it is possible to prevent the sheet-shaped electrodes corresponding to the ends of the electrode assembly from being deformed along the rounded parts of the corners of the square battery can (hereinafter, this function of the auxiliary insulating sheet is called as "stoppage function"). For a stack-type or wound-type secondary battery, for example, the above effect can be obtained in either of the stack-type lithium ion secondary battery or the wound-type lithium ion secondary battery.
Since the stoppage function is needed, the auxiliary insulating sheets may be formed of a material and to a thickness having stiffness. In consideration of formability, the auxiliary insulating sheets may be formed of a plastic resin. The auxiliary insulating sheets should not be deteriorated by an electrolyte. In addition, in order to sufficiently infiltrate the electrolyte into the electrode assembly, the auxiliary insulating sheet may have a function of infiltrating the electrolyte into the sheet itself. The auxiliary insulating sheet may have through-holes to provide the infiltration function.
When the material and thickness of the auxiliary insulating sheet are adjusted to being a plate (an auxiliary insulating plate) that is not easily bent or deformed, it is possible to more securely prevent deformation of the electrodes.

The fixing tape may be an insulating tape, or may be formed of a material that is not easily deteriorated by the electrolyte. In addition, an adhesive of the fixing tape may also be formed of a material that is not easily deteriorated by the electrolyte, for example, natural rubbers, synthetic rubbers, acrylics, vinyl alkyl ethers, silicones, polyesters, polyamides, urethanes, ethylene acryl acid esters, styrene butadiene block copolymers, styrene isoprene block copolymers, or the like. Here, even when there is no adhesive surface, a method of heating the fixing tape from the exterior to fuse the fixing tape to the auxiliary insulating sheet may be used.

In the stack-type secondary battery, the auxiliary insulating sheet has a width larger than the width of the electrode assembly in a direction perpendicular to the surface of the square battery can, on which the positive electrode terminal and the negative electrode terminal are formed, and the electrode assembly are pressed and fixed to each other by the fixing tape, so that bend or skew of an electrode tab of the plurality of sheet-shaped positive electrodes electrically connected to the positive electrode terminal and an electrode tab of the plurality of sheet-shaped negative electrodes electrically connected to the negative electrode terminal are alleviated, preventing the occurrence of failures. That is, the electrode assembly is fixed within the auxiliary insulating sheet having a large width protruded from the electrode tabs of the electrode assembly. Therefore, even when the secondary battery is unintentionally turned over, bend and skew of the electrode tabs are alleviated in comparison with the case in which the auxiliary insulating sheet are not provided, since the auxiliary insulating sheets are stopped in the square battery can to support the electrode assembly.

Since the two auxiliary insulating sheets each have a third part having a width substantially the same as width of the electrode assembly in the direction perpendicular to the surface, and a fourth part of which width, having the middle point substantially existed on a horizontal line from the middle point of the third part on a line perpendicular to the surface, is larger than the width of the electrode assembly in the direction of the line perpendicular to the surface and the first and second auxiliary insulating sheets are connected to each other in the third part by the fixing tape. Therefore, even when the secondary battery is turned over, it is possible to more securely fix the electrode assembly. That is, since the width of the third part is substantially the same as the width of the electrode assembly, it is possible to fix the electrode assembly between the two auxiliary insulating sheets without becoming loose. As a result, it is possible to more securely alleviate bends or skew of the electrode tabs.
Further, the electrode assembly is arranged within the auxiliary insulating sheet. Therefore, the electrode assembly is positioned in the auxiliary insulating sheets, as floating in midair, by connection of the first parts and the third parts of the two auxiliary insulating sheets.

In addition, since the auxiliary insulating sheet is one having stiffness or a plate that is not easily deformed, when the electrode assembly is inserted into the square battery can, the auxiliary insulating sheets, integrated with the electrode assembly by the fixing tape ,work as an insertion guide. Therefore, the electrode assembly can be easily inserted into the square battery can.

The secondary batteries may be connected in series or in parallel to constitute a set of batteries.

### [Advantageous Effects]

In accordance with the present invention, even when continuous vibrations are applied to a square battery can, it is possible to prevent deformation of sheet-shaped electrodes corresponding to ends of the electrode assembly along rounded corners of the square battery can. As a result, it is possible to provide a secondary battery and a power feeding and storage system using the battery that are capable of reducing probability of failures and exerting designed performance.

### [Brief Description of Drawings]

FIG. 1 shows a stack-type secondary battery in accordance with a first embodiment of the present invention. FIG. 1 (a) shows a cross-sectional view of a square battery can, FIG. 1 (b) shows a position relationship between a sheet-shaped positive electrode, a sheet-shaped negative electrode and an auxiliary insulating sheet, and FIG. 1(c) shows a specific shape of the auxiliary insulating sheet.
FIG. 2 is a cross-sectional view of a square battery can of a secondary battery in accordance with a second embodiment of the present invention.
FIG. 3 shows a secondary battery in accordance with a third embodiment of the present invention. FIG. 3(a) shows a position relationship between a sheet-shaped positive electrode, a sheet-shaped negative electrode and an auxiliary insulating sheet, and FIG. 3(b) shows a specific shape of the auxiliary insulating sheet.
FIG. 4 is a schematic view of a power feeding and storage system using a secondary battery in accordance with a fourth embodiment of the present invention.
FIG. 5 is a cross-sectional view of a square battery can of a conventional stack-type secondary battery.
FIG. 6 is a cross-sectional view of the square battery can of the conventional stack-type secondary battery showing a problem.
FIG. 7 is an enlarged cross-sectional view of the square battery can of the conventional stack-type secondary battery showing a problem.

### [Explanation of Reference]

- 1:: Square battery can
- 2:: Sheet-shaped positive electrode (Sheet-shaped electrode)
- 3:: Sheet-shaped negative electrode (Sheet-shaped electrode)
- 4:: Insulating film
- 5:: Insulating film
- 6:: Hollow part
- 7:: Auxiliary insulating sheet
- 8:: Auxiliary insulating sheet
- 9:: Fixing tape
- 10:: Fixing tape
- 11:: Positive electrode tab
- 12:: Negative electrode tab
- 13:: Electrode assembly
- 14:: Auxiliary insulating sheet
- 15:: House
- 16:: Switchboard
- 17:: Control box
- 18:: Preliminary secondary battery
- 19:: Power distribution system
- 20:: Power generation equipment
- 21:: Electric vehicle
- 22:: Secondary battery

### [Best Mode for Carrying out the Invention]

### (First Embodiment)

Hereinafter, a secondary battery in accordance with an embodiment of the present invention will be described with reference to the accompanying drawings. The present invention is not limited to the following embodiments, but may be variously modified without departing from the scope of the invention.

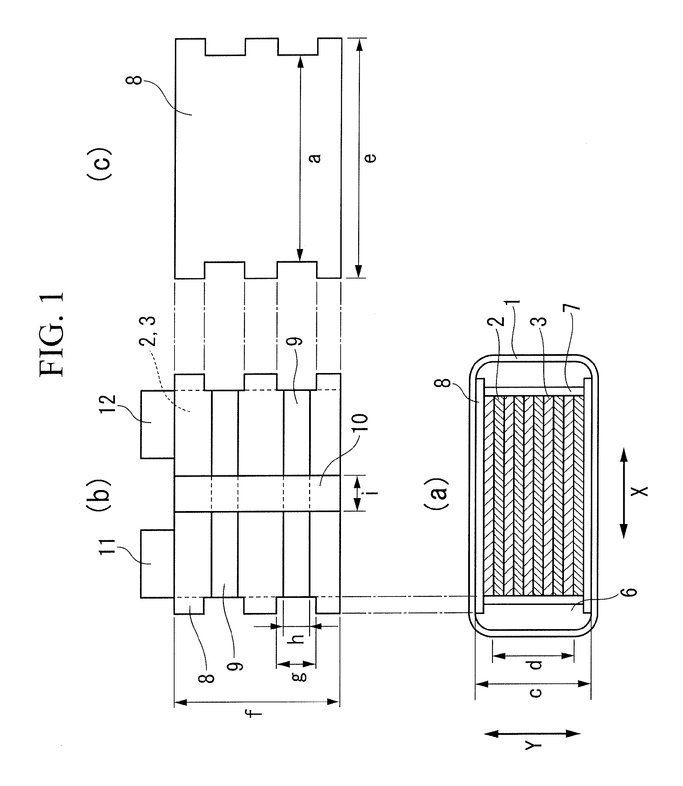

FIG. 1(a) is a cross-sectional view of a stack-type secondary battery. While not shown, a square battery can 1 formed of aluminum, or the like, has one surface on which a positive electrode terminal and a negative electrode terminal are installed. In addition, FIG. 1 (a) shows a cross-section along the surface on which the positive electrode terminal and the negative electrode terminal are formed, representing a position relationship between sheet-shaped positive electrodes 2, sheet-shaped negative electrodes 3, and auxiliary insulating sheets 8, which are encapsulated in the square battery can 1.
Further, FIG. 1(b) is a cross-sectional view perpendicular to the surface on which the positive electrode terminal (not shown) and the negative electrode terminal (not shown) are formed among surfaces of the square battery can 1, when seen from a lamination direction of the sheet-shaped positive electrodes 2 and the sheet-shaped negative electrodes 3. Furthermore, FIG. 1(c) is a part view specifically showing the auxiliary insulating sheet 8 in the lamination direction.

The square battery can 1 formed of aluminum, or the like, contains an electrode assembly, in which rectangular sheet-shaped positive electrodes 2 electrically connected to the positive electrode terminal (not shown) via a positive electrode tab 11 and rectangular sheet-shaped negative electrodes 3 electrically connected to the negative electrode terminal (not shown) via a negative electrode tab 12 are stacked or laminated with separators interposed therebetween.
As shown in FIG. 1 (c), the auxiliary insulating sheet 8 is configured to have parts of widths "e" and "a" in a direction perpendicular to a direction of the electrode tabs 11 and 12 of the laminated sheet-shaped positive electrodes and sheet-shaped negative electrodes, respectively. That is, the part of the width "a" of the auxiliary insulating sheet 8 is configured to form recesses in the auxiliary insulating sheet 8 from both sides in the direction perpendicular to the electrode tab direction. Specifically, a center of the part of the width "a" in the direction perpendicular to the electrode tab direction is designed to be on a line in a direction to the electrode tab, on which a center of the part of the width "e" in the direction perpendicular to the electrode tab direction exists.

In addition, the auxiliary insulating sheet 8 has a similar width in the electrode tab direction as an electrode surface width "f' in the electrode tab direction. The dimension "a" is a maximum width of the electrode in a direction of the long side of the surface of the square battery can 1, on which the electrode terminals are formed, i.e., a width of the electrode assembly. In consideration of formability, the auxiliary insulating sheet may be formed of a plastic resin such as polypropylene.

As shown in FIGS. 1(a) to 1(c), the two auxiliary insulating sheets 8 press and sandwich the electrode assembly therebetween, and fixing tapes 9 are adhered to the recess parts to connect the two auxiliary insulating sheets. In order to secure the connection, a width h of the fixing tape 9 should be smaller than a width g of the recess part.

In this embodiment, while the two auxiliary insulating sheets are connected by the two fixing tapes in a direction perpendicular to the electrode tab direction, i.e., in a direction perpendicular to a direction in which the electrode tabs 11 and 12 project, in order to strengthen the connection and securely fix the electrode assembly in the surfaces of the auxiliary insulating sheets, three or more fixing tapes may be used to connect them. In this case, a plurality of parts having the width "a" are formed in the auxiliary insulating sheet 8 to correspond to the number of the fixing tapes.
In addition, in order to prevent a misaligned stack in the electrode tab direction, as shown in FIG. 1(b), the fixing tape 10 may be adhered in the electrode tab direction to connect the two auxiliary insulating sheets 8. In this case, a width "i" of the fixing tape 10 may be different from the width h of the fixing tape 9, and further, both of the fixing tapes 9 and 10 may be formed of different materials.
Due to the location of the electrode tabs 11 and 12, it is difficult to arrange a plurality of fixing tapes 10 in the electrode tab direction. Therefore, the fixing tape 10 may have a larger width such that the electrode assembly can be sufficiently fixed by only one tape, for example, h<i.
In addition, the fixing tapes 9 and 10 may be adhered to surround both the electrode assembly and the two auxiliary insulating sheets 8. In this case, since the electrode assembly can be more securely fixed between the two auxiliary insulating sheets, it is possible to sufficiently prevent the misaligned stack.

The misaligned stack of the sheet-shaped electrodes due to vibrations, or the like, can be prevented by arranging the auxiliary insulating sheets 8 and connecting the auxiliary insulating sheets using the fixing tapes. Accordingly, the auxiliary insulating sheet 8 having a larger width than the electrode assembly is fitted to rounded parts of corners of the square battery can 1 to prevent the sheet-shaped electrodes corresponding to ends of the electrode assembly from entering the rounded parts. As a result, it is possible to prevent the failures. When the width "e" is substantially equal to an internal length "b" in a length direction X of a cross section in a direction parallel to a surface of the square battery can 1 on which the electrode terminals are formed, it is possible to more effectively prevent the sheet-shaped electrodes from entering the rounded parts.
In addition, according to the above configuration, even when the part of the width "e" of the auxiliary insulating sheet 8 is in contact with the square battery can in a short side direction Y of the cross section (the same as the lamination direction in this embodiment) due to vibration, since the electrode assembly is fixed inside the surfaces of the auxiliary insulating sheets 8, it is possible to prevent the electrode assembly from contacting the square battery can. For this reason, since it is possible to remove necessity of installing insulating films 5 of FIG. 5, manufacturing cost can be reduced.

Of course, in order to ensure safety, two auxiliary insulating sheets 7 may be formed to sandwich the electrode assembly in the short side direction of the surface on which the electrode terminals are formed. In this case, the auxiliary insulating sheets 7 may be wound into the fixing tapes to be connected to the two auxiliary insulating sheets 8 when the auxiliary insulating sheets 8 are connected to each other by the fixing tapes.
The auxiliary insulating sheets 7 and the auxiliary insulating sheets 8 may be formed of the same material or different materials. Unlike the auxiliary insulating sheets 8, since the auxiliary insulating sheets 7 are provided for the purpose of insulation only, the auxiliary insulating sheets 7 may be designed to have a thickness as small as possible to store a large amount of electrolyte between the electrode assembly and the square battery can 1.
Both the auxiliary insulating sheets 8 and the auxiliary insulating sheets 7 may have a function of facilitating infiltration of an electrolyte.
In addition, in this embodiment, an insulation film (not shown) is disposed on a bottom surface of the square battery can 1 to electrically insulate the electrode assembly from the square battery can 1.

While this embodiment shows a stack-type electrode assembly, it will be appreciated that the same effect can be obtained even when a wound-type electrode assembly is encapsulated in the square battery can. The secondary battery may be, for example, a lithium ion secondary battery.

### (Second Embodiment)

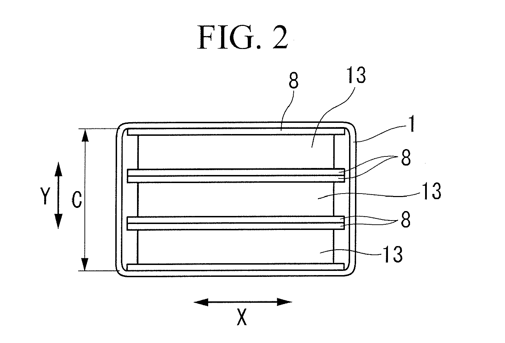

A secondary battery in accordance with a second embodiment of the present invention will be described with reference to FIG. 2. In this embodiment, 1 the same elements as in the above embodiment are designated by the same reference numerals, and detailed descriptions thereof will not be repeated. The present invention is not limited to the following embodiment, but may be variously modified without departing from the scope of the invention.

In FIG. 2, unlike the first embodiment, a plurality of, for example, three electrode assemblies 13 are disposed in the square battery can 1. That is, the square battery can 1 contains a set of three electrode assemblies in contact with each other in parallel by pressing one electrode assembly using two auxiliary insulating sheets 8 and connecting the two auxiliary insulating sheets 8 using the fixing tapes 9 and 10 such that the electrode assembly is fixed in the surfaces of the auxiliary insulating sheets 8. However, the total width of the set of three electrode assemblies in the short side direction Y may be substantially equal to the internal length "c" in the short side direction Y of the cross-section cut along the surface parallel to the surface of the square battery can 1 on which the electrode terminals are formed.
Except for this, the second embodiment is similar to the first embodiment. In the above configuration in which the set of three electrode assemblies are arranged, the auxiliary insulating sheets 8 corresponding to the outermost ends are stopped by the rounded parts of the corners of the square battery can, preventing the sheet-shaped electrodes corresponding to the ends of the electrode assembly from being curved.
In this embodiment, while the set of three electrode assemblies are arranged in the square battery can 1, a set of two electrode assemblies may be arranged, or a set of four or more electrode assemblies may be arranged.

### (Third Embodiment)

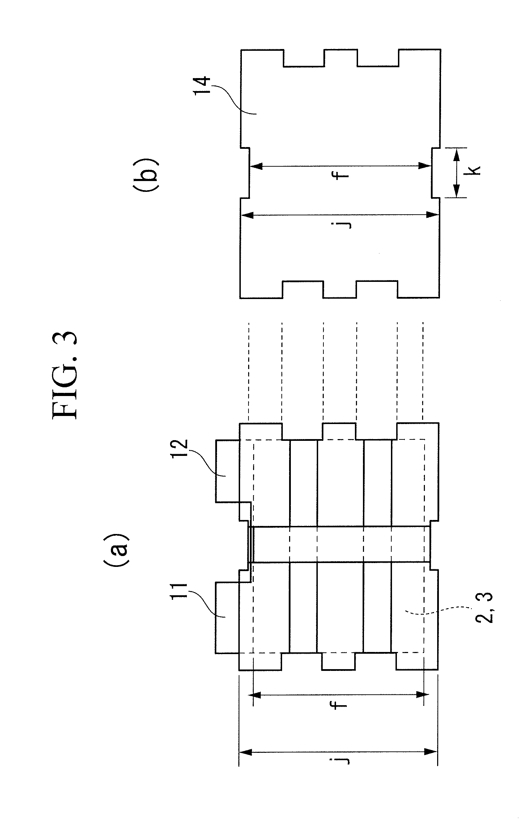

A secondary battery in accordance with a third embodiment of the present invention will be described with reference to FIGS. 3(a) and 3(b). In this embodiment, the same elements as in the above embodiment are designated by the same reference numerals, and detailed descriptions thereof will not be repeated. The present invention is not limited to the following embodiment, but may be variously modified without departing from the scope of the invention.

Unlike the auxiliary insulating sheet 8 of the first embodiment, FIGS. 3(a) and 3(b) show an auxiliary insulating sheet 14 having the part of the width "f" and a part of a width "j" larger than the width "f" in the direction of the electrode tabs 11 and 12. The part of the width "f" of the auxiliary insulating sheet 14 is configured to be recessed in the auxiliary insulating sheet 14 from both sides in the electrode tab direction. Specifically, a center of the part of the width "f" in the electrode tab direction and a center of the part of the width "j" in the electrode tab direction are designed to be on the same line perpendicular to the electrode tab direction.
Therefore, since the two auxiliary insulating sheets 14 having the recessed parts on which the fixing tape 10 is adhered are connected to each other by pressing the electrode assembly, a width "k" of the recessed part should be smaller than the width "i" of the fixing tape 10. In addition, similar to the first embodiment, the two auxiliary insulating sheets 14 are connected by the two fixing tapes 9.
Except for this, the third embodiment is similar to the first embodiment and the second embodiment.

According to this embodiment, since the electrode assembly can be fixed within the surfaces of the auxiliary insulating sheets 14, even when the battery can is turned over, the auxiliary insulating sheets 14 are in contact with the square battery can to attenuate curves of the electrode tabs, preventing failures.
Further, as mentioned above, since the electrode assembly is positioned within the auxiliary insulating sheet 14 and far from both ends of the auxiliary insulating sheet 14 as floating in midair, between the auxiliary insulating sheets 14, there is no need to arrange the insulation film on the bottom surface of the square battery can 1. As a result, manufacturing cost can be reduced.

### (Fourth Embodiment)

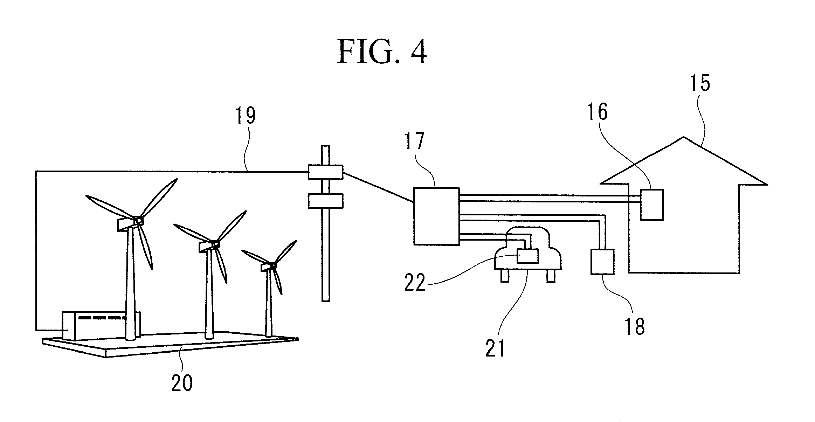

A power storage and feeding system using a secondary battery in accordance with a fourth embodiment of the present invention will be described with reference to FIG. 4. In this embodiment, the same elements as in the above embodiment are designated by the same reference numerals, and detailed descriptions thereof will not be repeated. The present invention is not limited to the following embodiment, but may be variously modified without departing from the scope of the invention.

A secondary battery 22 installed in an electric vehicle 21 and a preliminary secondary battery 18 arranged outside a house 15 are secondary batteries, for example, stack-type lithium ion secondary batteries, in accordance with the present invention described in the first to third embodiments.

First, a power storage system will be described. Electric power, generated from power generation equipment 20 such as wind power generation, thermal power generation, hydroelectric power generation, nuclear power generation, a solar cell, a fuel cell, or the like, is supplied to a control box 17 used by a user via a power distribution system 19. When the user operates the control box 17, the power transmitted from the power generation equipment 20 is supplied to any one of the secondary battery 22 as a drive power source of the electric vehicle 21, the preliminary secondary battery 18, and a switchboard 16. The preliminary secondary battery 18 or the secondary battery 22 of the electric vehicle 21 performs power charge/storage as the power is supplied. In order to use the preliminary secondary battery 18 as a preliminary power source when the power feeding from the power generation equipment 20 is stopped due to a disaster, or the like, it is preferable to sufficiently store power in the preliminary secondary battery 18.
The control box may be program-controlled such that the power is supplied to the switchboard 16 by day and to the preliminary secondary battery 18 or the secondary battery 22 of the electric vehicle 21 by night.

Hereinafter, a power feeding system will be described. The preliminary secondary battery 18 charged by the power storage system is electrically connected to the switchboard 16 in the house 15 via the control box 17. The switchbox 16 is electrically connected to home appliances such as an air conditioner, a television, or the like, which are connected to plugs in the house 15. The user can select to drive the home appliances in the house 15 using power received from the power distribution system 19 or using power of the preliminary secondary battery 18 stored by the power storage system through the control box 17.
By means of a switching operation of the control box 17, when the preliminary secondary battery 18 is electrically connected to the switchboard 16, electric power can be fed from the preliminary secondary battery 18 to the switchboard 16 to drive the home appliances.

The electric vehicle 21 can run by feeding power to a wheel driving motor from the secondary battery 22 charged by the power storage system. The electric vehicle 21 may be a vehicle having wheels that can be driven by an electric motor or a hybrid vehicle.

Since the power storage and feeding system using the secondary battery in accordance with the present invention can securely prevent the misaligned stack and electrode curves from occurring in the corners of the square battery can due to vibration, one cause of failures of the secondary battery, even when the system is used in a vehicle to which a large amount of vibrations are applied as the power feeding system and in a country in which earthquakes frequently occur as the power feeding and storage system, it is possible to stably operate without trouble.

## Claims

1. A secondary battery comprising:
a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked with a separator interposed between them;
a fixing tape; and
a first auxiliary insulating sheet and a second auxiliary insulating sheet, each having a first part of which width is substantially the same as width of the electrode assembly along a direction of a long side of a surface of the square battery can, on which the positive electrode terminal and the negative electrode terminal are formed, and a second part of which width, having the middle point on a line perpendicular to the surface and on which the middle point of the width of the first part exists substantially, is larger than the width of the electrode assembly along the direction of the long side,
wherein the first auxiliary insulating sheet and the second auxiliary insulating sheet are arranged to sandwich the electrode assembly between them from sides of the electrode assembly corresponding to the long side of the surface and connected to each other by the fixing tape at the first part.

2. The secondary battery according to claim 1, wherein the first and the second auxiliary insulating sheets have width larger than the width of the electrode assembly along the line perpendicular to the surface of the square battery can on which the positive electrode terminal and the negative electrode terminal are formed.

3. The secondary battery according to claim 2, wherein the first and the second auxiliary insulating sheets each have a third part of which width substantially the same as width of the electrode assembly along a direction of the line, and a fourth part of which width, having the middle point substantially existed on a horizontal line from the middle point of the third part on the line perpendicular to the surface, is larger than the width of the electrode assembly along the direction of the line perpendicular to the surface, and the first and the second auxiliary insulating sheets are connected to each other in the third part by the fixing tape.

4. The secondary battery according to claim 3, wherein the sheet-shaped positive electrode and the sheet-shaped negative electrode are provided in plural, and the sheet-shaped positive electrodes and the sheet-shaped negative electrodes are stacked or laminated with separators interposed between them.

5. An electric vehicle comprising:
a secondary battery; and
a motor for driving wheels,
wherein the motor is driven by receiving electric power from the secondary battery, and
the secondary battery including:
a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked with a separator interposed between them;
a fixing tape; and
a first auxiliary insulating sheet and a second auxiliary insulating sheet, each having a first part of which width is substantially the same as width of the electrode assembly along a direction of a long side of a surface of the square battery can, on which the positive electrode terminal and the negative electrode terminal are formed, and a second part of which width, having the middle point on a line perpendicular to the surface and on which the middle point of the width of the first part exists substantially, is larger than the width of the electrode assembly along the direction of the long side ,
wherein the first auxiliary insulating sheet and the second auxiliary insulating sheet are arranged to sandwich the electrode assembly between them from sides of the electrode assembly corresponding to the long side of the surface and connected to each other by the fixing tape in the first part.

6. A power storage system comprising:
a secondary battery; and
a power generation equipment,
wherein the secondary battery receives electric power from the power generation equipment to store the power, and
the secondary battery including:
a square battery can including a positive electrode terminal and a negative electrode terminal are installed;
an electrode assembly arranged in the square battery can, in which a sheet-shaped positive electrode electrically connected to the positive electrode terminal and a sheet-shaped negative electrode electrically connected to the negative electrode terminal are stacked with a separator interposed between them;
a fixing tape; and
a first auxiliary insulating sheet and a second auxiliary insulating sheet, each having a first part of which width is substantially the same as width of the electrode assembly along a direction of a long side of a surface of the square battery can, on which the positive electrode terminal and the negative electrode terminal are formed, and a second part of which width, having the middle point on a line perpendicular to the surface and on which the middle point of the width of the first part exists substantially, is larger than the width of the electrode assembly along the direction of the long side,
wherein the first auxiliary insulating sheet and the second auxiliary insulating sheet are arranged to sandwich the electrode assembly between them from sides of the electrode assembly corresponding to the long side of the surface and connected to each other by the fixing tape in the first part.
